# EUROPEAN PATENT SPECIFICATION

(11) **EP 3 958 416 B1**
(45) Date of publication and mention of the grant of the patent: **24.04.2024**
(21) Application number: 21189103.1
(22) Date of filing: 02.08.2021
(51) Int. Cl.: H02G 3/12

(54) **INSTALLATION BOX WITH VARIABLE HEIGHT**
INSTALLATIONSDOSE MIT VARIABLER HÖHE
BOÎTE D'INSTALLATION À HAUTEUR VARIABLE

(30) Priority: 17.08.2020 NL 2026275
(43) Date of publication of application: 23.02.2022
(60) Divisional application: 22162362.2
(73) Proprietor: Attema B.V., 4203 NJ Gorinchem (NL)
(72) Inventor: de HOOG, Antonie, 4203 NJ GORINCHEM (NL)
(74) Representative: EP&C

(56) References cited:
- DE-A1- 2 802 893
- GB-A- 2 505 191

## Description

### FIELD OF THE INVENTION

The invention relates to the field of installation material for mounting in a wall of a building, and more specifically to installation boxes, also referred to as junction boxes. The installation box is configured to be part of an installation, such as an electrical and/or optical installation, and serves for interconnecting electrical wiring and/or optical fibers, and accommodating electrical and/or optical installation material such as switching material.

### BACKGROUND OF THE INVENTION

Installation boxes are mounted in holes in a wall of a building. Such a hole may be provided according to the circumstances at hand. If the wall is a solid wall, for example made of concrete or brickwork, a blind hole with a predetermined depth, depending on the thickness of the wall, may be provided. If the wall is a so-called hollow wall, comprising a hollow space behind a front wall plate and providing a predetermined depth behind the front wall plate, a hole is made in the front wall plate to provide access to said hollow space having a predetermined depth.

A height of the installation box needs to be adapted to the available depth of the hole in the wall. In the case of installation boxes made of a solid (plastic) material, a particular installation box having a particular height should be available to fit into the hole in the wall to be flush mounted. If the depth of the hole is less than the height of the installation box, the installation box cannot be flush mounted in the wall.

It is known to provide installation boxes having a variable height, so that one type of installation box can be used in holes having different depths.

For example, first reference GB 2 505 191 A discloses a device suitable for retaining a component, such as a light fitting, in a desired position relative to a surface comprises a collar or cuff attachable to the component. The device has a portion which is movable between a first, retracted position and a second, extended position. In the retracted position the device is of a dimension which can pass through an aperture in a wall, and wherein in the extended position the device is of a dimension which exceeds a corresponding dimension of the aperture so as to retain the device, and an attached component, in the desired position. The device is preferably attached to the component around substantially an entire perimeter of the component. The moveable portion is preferably biased towards the extended position. The device may be adjustable in size to fit different sized components.

Second reference EP 1 670 112 A1 discloses a box for electric wirings comprising a circumferential wall and a bottom wall connecting to a first edge of the circumferential wall, which form a chamber for a contact unit or switch unit for the electric wiring. The circumferential wall defines an opening at a second edge opposite to the first edge, which opening is intended to be facing a living quarter after having been installed. The bottom of the box comprises a bottom portion that is movable between a first position and at least one second position in which the bottom portion is situated at a different distance from the second edge than in the first position. The circumferential wall and the bottom wall have been formed as one unity with each other and comprise a deformable portion. The deformable portion can be changed between a first condition which is stable in itself for the first position of the bottom portion, and at least one second condition which is stable in itself for the second position of the bottom portion.

Thus, the second reference discloses a box for electric wirings, wherein the depth of the box defined by the bottom wall is adjustable between at least two different depths. Put in other words, the height of the box is adjustable between at least two different heights. For this purpose, the bottom of the box may have a small circumferential edge area at the location of the connection to the circumferential wall, which area in radial inward direction via a circular folding line changes into a first circular circumferential strip, which at its radial inward edge via another circular folding line changes into a second circumferential strip surrounding a bottom plate that is solidly connected thereto, wherein said second circumferential strip is substantially perpendicular to the bottom plate. The folding lines are formed by weakenings in the material at that location. The folding lines are situated as close to the edge area as possible.

A disadvantage of the box according to the second reference is that the first circumferential strip radially extends inwardly with respect to the circumferential wall of the box to be able to provide a snapping function for positioning the bottom plate in the first condition and the second condition of the bottom portion of the box. Therefore, the bottom portion of the box anyway is smaller in diameter in comparison with the remainder of the box. In case of maximum depth of the box, the bottom portion tapers towards the bottom plate. In case of minimum depth of the box, the first circumferential strip blocks considerable space within the box which cannot be used for electric wiring and/or a switch unit or contact unit.

As another example, third reference DE 28 02 893 A1 discloses an apparatus box to be built into a wall, and comprising a side wall having a circumferentially extending elastically deformable wall area for adjusting the box height to different available depths of a hole in the wall. The wall area may, for example, be formed as a bellows or a rolling membrane.

A disadvantage of the box according to the third reference is that the deformable wall area consumes space inside the apparatus box, which cannot be used for electric wiring and/or installation units to be mounted in the box.

As a further example, fourth reference FR 2 859 320 A1 discloses an installation box with a controllable depth as seen along a central longitudinal axis. The box has a bottom wall and a tubular, telescoping side wall which is formed from at least two wall sections. A first wall section is connected to the bottom wall and comprises a plurality of flexible legs which are regularly distributed around the longitudinal axis. A second wall section is rigid. The legs of the first wall section alternate with rigid connection means which are regularly distributed around the longitudinal axis, wherein in the situation of the largest depth of the box each one of the connection means establishes a rigid connection between the bottom wall and the second wall portion. At a radial connection between the connection means and the second wall portion, the rigid connection can be broken by application of a predetermined axial compression force in the direction of the longitudinal axis, to effect a telescoping movement of the connection means of the first wall portion and the second wall portion relative to each other to decrease the depth of the box by displacement of the bottom wall relative to the second wall portion. With this telescoping movement, the connection means are displaced at the inner diameter of the second wall portion, and the flexible legs are bent inwardly into the interior of the installation box.

A disadvantage of the box according to the fourth reference is that the connection means and the flexible legs consume space inside the installation box having a decreased depth, which space cannot be used for electric wiring and/or installation units to be mounted in the box.

In view of the above, a need exists to improve the installation box with variable height.

### SUMMARY OF THE INVENTION

It would be desirable to provide an improved or at least alternative installation box having a variable height, in which at least one of the disadvantages mentioned above is removed. It would also be desirable to provide an installation box with variable height wherein the volume and dimensions of the available interior space are optimized at different heights.

To better address one or more of these concerns, in a first aspect of the invention an installation box for mounting in a hole of a wall is provided. The installation box has a longitudinal axis, and comprises:
a rigid cylindrical upper side wall portion having a first upper edge region defining a box mouth, and a first lower edge region;
a deformable cylindrical lower side wall portion having a second upper edge region adjoining the first lower edge region, and a second lower edge region; and
a circular bottom wall adjoining the second lower edge region,
wherein the lower side wall portion comprises:
   a plurality of lower side wall parts made from a flexible material, each extending in a circumferential direction from one support strip to an adjacent support strip and extending in a longitudinal direction from the second upper edge region to the second lower edge region, wherein a mesh formed between each pair of adjacent support strips and between the second upper edge region and the second lower edge region is closed off or sealed by a lower side wall part, and wherein the support strips are made from a material which is more rigid than the flexible material of the lower side wall parts,
   wherein each support strip has an extended state and a folded state, and is configured to remain in the extended state under a compressive force exerted in a direction along the longitudinal axis when said force is less than or equal to a predetermined force, and to fold outwardly from the extended state to the folded state along a folding line located between the second upper edge region and the second lower edge region and extending transverse to the longitudinal axis of the installation box, when said compressive force exceeds said predetermined force, and
   wherein the installation box has a first height when each support strip is in its extended state, and the installation box has a second height when each support strip is in its folded state, wherein the second height is smaller than the first height.

The longitudinal axis of the installation box is a central axis running through a centre of the mouth of the installation box, and through a centre of the bottom wall of the installation box.

Herein, the adjectives 'upper' and 'lower' are associated with an installation box position in which the mouth of the installation box is upwards, and the bottom wall of the installation box is downwards. Hence, in this installation box position, the upper side wall portion is arranged above the lower side wall portion.

Herein, a support strip has a shape with a width and a length, wherein the length is larger than, and at least equal to the width. The support strip has a thickness which is smaller, in particular considerably smaller, than each one of the width or the length of the support strip. The lengthwise direction of the support strip is parallel to the longitudinal axis of the installation box. The width of the support strip may vary along the lengthwise direction, e.g. be smaller at the upper end connected to the first lower edge region and larger at the lower end connected to the bottom wall, or vice versa, or be smaller in a central section than at the upper and lower ends connected to the first lower edge region and the bottom wall, respectively. The support strips are made from a material which is more rigid than the flexible material of the lower side wall parts. The support strips may be made from a rigid material. The support strips may be made from the same rigid material as the upper side wall portion. The support strips may be formed integral with the upper side wall portion. The support strip may be formed integral with the bottom wall. Window parts of the upper side wall portion and the bottom wall may be made of a flexible material.

Herein, the indication 'rigid' with respect to the upper side wall portion is to indicate 'substantially undeformable', at least in the direction of the longitudinal axis of the installation box, and at least in any normal use or mounting condition of the installation box.

Each pair of adjacent support strips will form between them, and between the first lower edge region and the bottom wall, a mesh which is closed off or sealed by a lower side wall part made from a flexible material.

In the extended state of the support strip, a distance between (longitudinal) ends of the support strip is larger than the distance between the ends of the support strip in the folded state thereof.

The installation box according to the present invention comprises a lower side wall portion which provides the installation box with a variable height, which may be varied in a continuous way (as opposed to in discrete steps) between a maximum height and a minimum height. In particular, the installation box has a maximum height or first height when each support strip is in its extended state, and the installation box has a second height when each support strip is in its folded state, wherein the second height is smaller than the first height. The second height is variable, and has a minimum height, when further folding of the supports strips is not possible.

Before mounting the installation box in a hole of a solid or hollow wall, the installation box may have the maximum or first height, wherein the support strips are in their extended state.

The hole in the solid or hollow wall provide a depth which is equal to, or larger than, the maximum, first height of the installation box. When mounting the installation box in the hole of the wall, the installation box mouth may be mounted flush with the outer plane of the wall in which the hole is provided. The installation box may retaining its maximum, first height, with all support strips in their extended state, providing a maximum volume at the interior of the installation box for wiring and mounting installation material.

In other circumstances, the hole in the solid or hollow wall may provide a depth which is less than the maximum, first height of the installation box. During mounting of the installation box in the hole of the wall, the bottom wall of the installation box may encounter drilling residues or other minor obstacles, requiring a first force exerted on the installation box to pass and/or move away such obstacles without causing the support strips to go from their extended state to their folded state. During further mounting of the installation box, there will be a point where the bottom wall of the installation box contacts a hole bottom, so that the bottom wall of the installation box cannot move any further into the hole. Next, by exerting such force, being larger than said first force, on the support strips to exceed said predetermined force under which the support strips go from their extended state into their folded state, the support strips will fold and the lower side wall parts will not rupture, and flexibly deform following the folding of the support strips, whereby the height of the lower side wall portion may decrease, and the upper side wall portion may move further into the hole until the box mouth is substantially flush with the outer plane of the wall in which the hole is provided. The lower side wall parts extending between the support strips and made from a flexible material allow the support strips to fold without creating an opening in the lower side wall portion of the installation box. Forces exerted on the installation box to be equal to, or to exceed said predetermined force under which the support strips go from their extended state into their folded state are normally generated by a person mounting the installation box in the hole in the wall.

Accordingly, the installation box is suitable to be mounted into a hole in the solid or hollow wall providing a depth of at least the minimum height of the installation box in the folded state of the support strips, or deeper.

In case the height of the installation box is decreased in the folded state of the support strips, inherent elastic properties of the support strips and the lower side wall parts extending between the support strips may ensure that the bottom wall of the installation box is firmly pushed against the hole bottom, thereby maximizing the depth of the installation box. Since the support strips fold outwardly, in particular radially outwardly, the available volume inside the installation box to accommodate wiring and installation material, is maximized under the prevailing circumstances of the hole depth, since no parts of the lower side wall portion are directed inwardly in any collapsed condition of the lower side wall portion wherein the support strips are in a folded state.

In an advantageous embodiment of the installation box, each support strip in its extended state is located within an outer circumference of the upper side wall portion, and each support strip in a folded state thereof at least partially extends outside the outer circumference of the upper side wall portion, in particular when the bottom wall has the same diameter as the second upper edge region.

In an advantageous embodiment of the installation box, at the second upper edge region, each support strip is hingeably connected to the first lower edge region. Additionally or alternatively, in an embodiment of the installation box, at the second lower edge region, each support strip is hingeably connected to the bottom wall.

Here, a hinge function may be provided by a hinge being formed integrally in a production process of the installation box, such as by a weakened connection between an upper end of the support strip and the adjacent first lower edge region (or second upper edge region) and/or by a weakened connection between a lower end of the support strip and the adjacent second lower edge region, or being formed in another known way. When a hingeable connection is provided, the folding of the support strip will be facilitated.

A support strip in its extended state may be straight as seen in a lengthwise direction (i.e., the length and width of the support strip define an essentially flat surface) or bent or curved or angled in a lengthwise direction. A radial distance of an upper end of a support strip with respect to the longitudinal axis of the installation box may be larger than a radial distance of a lower end of a support strip with respect to the longitudinal axis of the installation box. In case of a bent or curved or angled shape of the support strip in its lengthwise direction, a concave side of the support strip faces the interior of the installation box. An angled support strip comprises a straight upper strip section and a straight lower strip section extending at an angle less than 180 degrees, in particular between 150 and 180 degrees, to the upper strip section. In case of straight or bent or curved or angled support strips, a diameter of the second upper edge region of the lower side wall portion may be equal to, or larger than a diameter of the second lower edge region of the lower side wall portion.

In the installation box, each support strip is configured to fold radially outwardly from the extended state to the folded state along a folding line extending transverse to the longitudinal axis of the installation box. Herein, the folding line may be a straight line, or a slightly curved line having a maximum radius of the cylinder defining the cylindrical shape of the lower side wall portion. The folding line extends transverse, or substantially at right angles, to the longitudinal axis of the installation box, and is also transverse, or substantially at right angles, to a radial line from the longitudinal axis of the installation box to a centre of the support strip. The slight curvature may be in a plane extending at right angles to the longitudinal axis of the installation box, with the concave side of the curvature facing an interior of the installation box.

The folding line may be defined by at least one recess or groove in the support strip.

In case of a straight support strip, the at least one recess or groove may be located at the side of the support strip facing an interior of the installation box.

In case of a bent or curved or angled support strip, wherein a concave side of the support strip faces the interior of the installation box, the at least one recess or groove may be located at the side of the support strip facing an interior of the installation box, or at the side of the support strip facing away from the interior of the installation box. The bent or curved or angled shape of the support strip naturally urges the support strip to fold radially outwardly upon exertion of a compressive force in a direction along the longitudinal direction of the installation box on the opposite ends of the support strip.

The at least one recess or groove forms a mechanically weakened or thinned part of the support strip allowing the support strip to fold at this weakened part, and defining the location of folding of the support strip and preventing it to fold at another location not having the recess or groove. A cross-section of the groove may be semi-circular, triangular, rectangular, or have any other suitable shape.

The location of folding of the support strip may be in the centre of the support strip between the upper (longitudinal) end of the support strip and the lower end of the support strip.

In other embodiments, the folding line may be defined by forming a mechanically weakened portion in the support strip by applying a flexible material portion in the support strip at the location of the folding line.

In case of a straight upper strip section and a straight lower strip section, the associated respective upper and lower strip section extending between the hinges at the first lower edge region (or second upper edge region) and the second lower edge region, respectively, and the folding line may remain straight in a collapsed state of the installation box, i.e. when the support strip is in its folded state.

In an advantageous embodiment of the installation box, a distance between the folding line and the second upper edge region is substantially equal to the distance between the folding line and the second lower edge region.

In other words, the upper strip section and the lower strip section may have equal lengths, in particular when the bottom wall has the same diameter as the second upper edge region. When the length of the upper strip section is substantially equal to the length of the lower strip section, a maximum difference between the maximum height of the installation box and the minimum height of the installation box can be achieved.

In other embodiments, e.g. when the diameter of the bottom wall is smaller than the diameter of the second upper edge region, the length of the upper strip section may differ from the length of the lower strip section, in particular may be less than the length of the lower strip section.

In an advantageous embodiment of the installation box, each support strip is curved along the circumference of the lower side wall portion, with a concave side of the support strip facing an interior of the installation box.

The lower side wall portion has a substantially cylindrical shape, and the support strip, in its width direction, may follow the cylindrical curvature. Accordingly, also the folding line will be curved, with a concave side of the folding line facing the interior of the installation box. This curvature promotes folding of the support strip in a radially outward direction, when the predetermined force is exceeded to lead to the folding, whereas folding in a radially inward direction is effectively prevented by the curvature.

In an advantageous embodiment of the installation box, the width of each support strip in a circumferential direction of the lower side wall portion is smaller than the length of the support strip in a direction along the longitudinal axis of the installation box.

For the desired folding of the support strip, when the predetermined force is exceeded to lead to such folding, a ratio of the width to the length of the support strip is between 0.1 and 0.5, in particular about 0.15.

In an advantageous embodiment of the installation box, the support strips are equidistantly spaced along the circumference of the lower side wall portion.

This provides a symmetrical structure of the installation box, wherein the folding of the support strips, when the predetermined force is exceeded to lead to such folding, is obtained along the circumference of the lower side wall portion in a same way. Since the folding normally is initiated by an installation box mounting force exerted at the mouth of the installation box, which may be distributed unevenly along the circumference of the mouth, the box will show the same folding behaviour regardless of the location of exerting the mounting force along the circumference of the mouth.

In some embodiments, the installation box is provided with coupling means allowing the installation box to be coupled to another similar installation box. In order to prevent an outwardly folded support strip of one of the coupled installation boxes contact an outwardly folded support strip of the other one of the coupled installation boxes, which would prevent one or both of said support strips to fold properly and thus would prevent a proper mounting of the coupled installation boxes in a wall opening, no support strip is provided in a circumferential position of the installation box where a centre of a coupling with another installation box is envisaged.

In an embodiment of the installation box, a width of each support strip in the circumferential direction of the lower side wall portion is the same.

Advantageously, the predetermined force which, when exceeded, leads to folding of the support strip may be the same for each support strip when the widths of the support strips are equal, including the case that the width of each support strip varies along its length.

In an embodiment of the installation box, a ratio of the width of a support strip to a width of a lower side wall part is between 0.15 and 1, in particular about 0.2.

Here, a trade-off may be made between the number of support strips and their widths to obtain the desired folding of the support strips when needed.

In an advantageous embodiment of the installation box, the lower side wall parts are integral with a cylindrical layer of flexible material provided on the support strips at the side thereof facing away from the interior of the installation box.

The layer forms a continuous closed wall part supporting the support strips both in their extended state and in their folded state. The layer provides ease of manufacture of the installation box in a two-component injection moulding process, and reduces a risk of breaking or tearing of the flexible material of the lower side wall parts.

In an advantageous embodiment, the installation box is made from plastic materials. In particular, each support strip may be made of polypropylene and/or each lower side wall part may be made of a thermoplastic elastomer, TPE, material.

In advantageous embodiments of the installation box, the upper side wall portion on its outer surface may be provided with radially extending retaining projections for clamping the installation box inside a hole of the wall, wherein the retaining projections are flexible and elastic, and comprise:
retaining arms each having a J-shaped cross-section, each retaining arm being connected to the outer surface of the upper side wall portion at one end of the retaining arm, the connection extending substantially parallel to the longitudinal axis, each retaining arm being configured to be elastically bent relative to said connection to deform when urged to do so during the mounting of the installation box in the hole; and
retaining flaps connected to the outer surface of the upper side wall portion at one end of each retaining flap, the connection extending substantially in a circumferential direction, each retaining flap extending substantially in a plane transverse to the longitudinal axis, and being configured to be elastically bent relative to said connection to deform upwardly when urged to do so during the mounting of the installation box in the hole.

The retaining projections may aid in stabilizing a position of the installation box in a hole in the wall, whether the support strips of the lower side wall portion are in an extended state or in a folded state.

These and other aspects of the invention will be more readily appreciated as the same becomes better understood by reference to the following detailed description and considered in connection with the accompanying drawings in which like reference symbols designate like parts.

### BRIEF DESCRIPTION OF THE DRAWINGS

Figure 1 depicts a perspective view of an embodiment of the installation box according to the present invention.
Figure 2 depicts a side view of the embodiment of the installation box of Figure 1, viewed in a direction indicated by II in Figure 1.
Figure 3 depicts a top view of the embodiment of the installation box of Figure 1.
Figure 4 depicts a bottom view of the embodiment of the installation box of Figure 1.
Figure 5 depicts a cross-sectional view of the embodiment of the installation box of Figure 1, according to a plane indicated by V-V in Figure 3.
Figure 6 depicts a detailed view on an enlarged scale of a part of Figure 5.
Figure 7 depicts a cross-sectional view of the embodiment of the installation box of Figure 1, according to a plane indicated by VII-VII in Figure 5.
Figures 8A, 8B and 8C depict cross-sectional views similar to Figure 5 of the embodiment of the installation box of Figure 1, in an extended state of the support strips, in a first partially folded state of the support strips, and in a second fully folded state of the support strips, respectively.
Figures 9A, 9B and 9C illustrate cross-sectional views of alternative shapes of support strips.

### DETAILED DESCRIPTION OF EMBODIMENTS

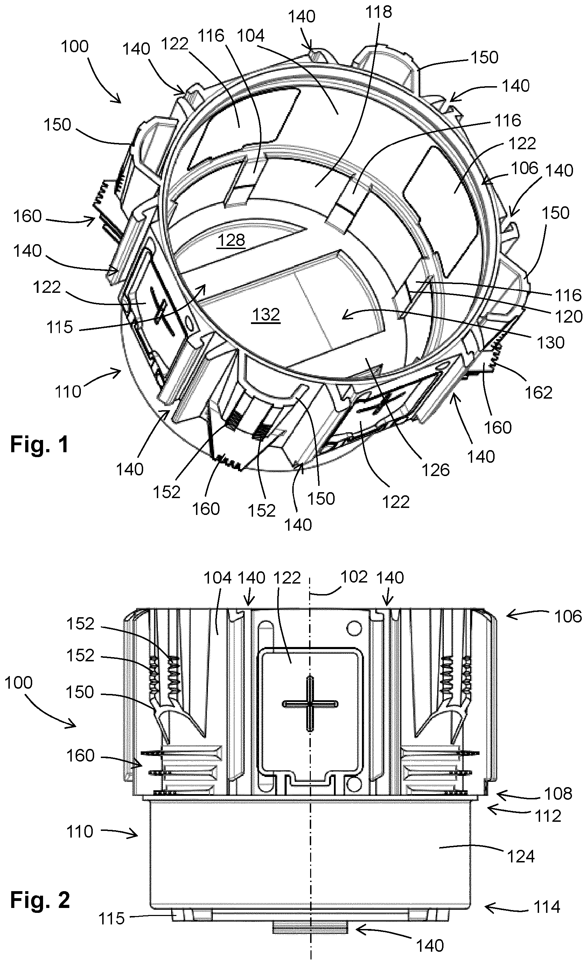

Figures 1 to 7 depict (parts of) an embodiment of an installation box 100 configured for mounting in a hole of a wall. The installation box 100 has an (imaginary) longitudinal axis 102 (as shown in Figure 2). The installation box 100 comprises a rigid cylindrical upper side wall portion 104 having a first upper edge region 106 defining an open box mouth which is configured to be closed off by a cover (not shown), and a first lower edge region 108. Furthermore, the installation box 100 comprises a deformable cylindrical lower side wall portion 110 having a second upper edge region 112 adjoining the first lower edge region 108, and a second lower edge region 114. A circular bottom wall 115 adjoins the second lower edge region 114.

The lower side wall portion 110 comprises a plurality of support strips 116 spaced along the circumference of the lower side wall portion 110. In the depicted embodiment, eight support strips 116 are present. However, in other embodiments, less or more than eight support strips may be included, depending on the configuration and/or sizes of the support strips and the use conditions. Each support strip 116 extends between the second upper edge region 112 and the second lower edge region 114 in the direction of the longitudinal axis 102. The lower side wall portion 110 further comprises a plurality of lower side wall parts 118 made from a flexible material. Each lower side wall part 118 extends between two adjacent support strips 116 and between the second upper edge region 112 and the second lower edge region 114.

As will be explained in more detail below, each support strip 116 is configured to remain in an extended state under a force exerted in a direction along the longitudinal axis 102 of the installation box 100 when said force is less than or equal to a predetermined force, and to fold outwardly along a folding line 120 (Figure 1) extending transverse to the longitudinal axis 102 of the installation box 100 from the extended state to a folded state when said force exceeds said predetermined force.

The upper side wall portion 104 mainly is made from a rigid material, such as a plastic material, in particular polypropylene, with the exception of window parts 122 which are made from a flexible material, and may be pierced to allow the passage or wires, cables or other installation material. This flexible material may be the same as the flexible material of the lower side wall parts 118, or may differ therefrom. Overall, the structure of the upper side wall portion 104 is essentially rigid, at least when considered in the direction of the longitudinal axis 102 of the installation box 100.

The lower side wall portion 110 comprises a cylindrical layer of flexible material 124, and the support strips 116. The layer 124 extends over, and is in contact with the side of the support strips 116 facing away from an interior of the installation box 100. The lower side wall parts 118 are integral with the layer 124. In other embodiments, the lower side wall parts 118 may alternate with the support strips 116, so that there is no layer 124, in particular there is no flexible material, on the side of the support strips 116 facing away from an interior of the installation box 100, and there is only the flexible material of the lower side wall parts 118 between adjacent support strips 116.

The width of each support strip 116 in a circumferential direction of the lower side wall portion 110 is smaller than the length of the support strip 116 in a direction along the longitudinal axis 102 of the installation box 100. In the embodiment shown in the Figures, a ratio of the width to the length of the support strip is about 0.15. In other embodiments, the ratio may be between 0.1 and 0.5. The supports strips 116 are equidistantly spaced along the circumference of the lower side wall portion 110. The width of each support strip 116 in the circumferential directions of the lower side wall portion 110 is the same. Also, the width of each support strip 116 is the same along its length. A ratio of the width of a support strip to a width of a lower side wall part 118 is about 0.2. In other embodiments, the ratio may be between 0.15 and 1.

The bottom wall 115 comprises a frame 126 made from a rigid material, and comprising windows 128, 130 made from a flexible material. The window 130 comprises a window part 132 having the same function as the window parts 122 to provide, upon piercing, a passage for wires, cables and other installation material.

The parts of the installation box 100 made from a rigid material, and the parts of the installation box 100 made from a flexible material may be obtained through a two-component injection moulding process by injecting, for example, polypropylene as the rigid material, and thermoplastic elastomer, TPE, as the flexible material. Other materials providing the required rigidity and flexibility, respectively, and showing suitable elasticity, may be applied as well.

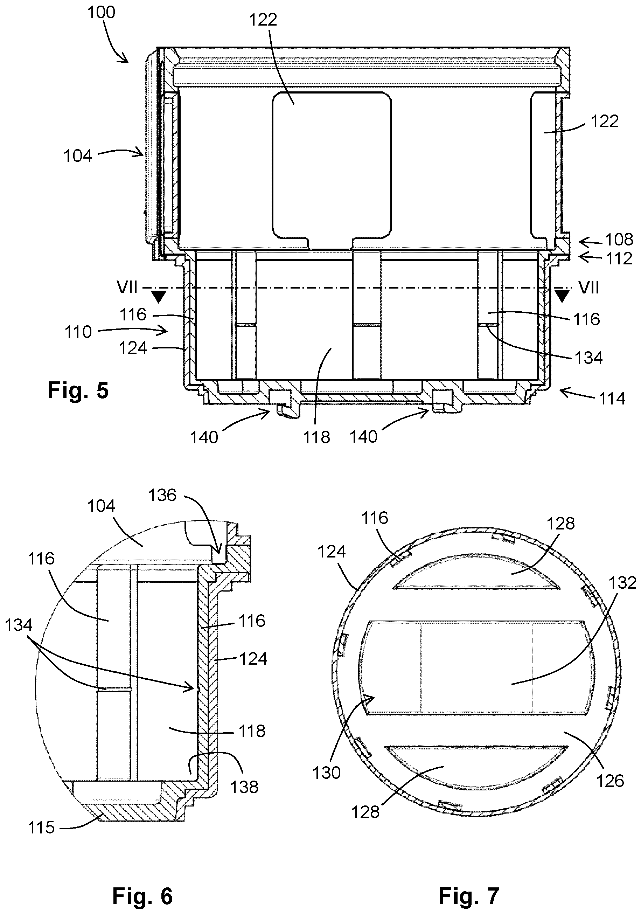

Referring to Figures 5 to 7, each support strip 116 is provided with a recess or groove 134 at the side of the support strip 116 facing the interior of the installation box 100. The groove may have a semi-circular, a triangular, a rectangular, or another suitable cross-section.

The groove 134 determines a folding line 120 (Figure 1). A distance between the groove 134 and the second upper edge region 112 is substantially equal to the distance between the groove 134 and the second lower edge region 114. The groove 134 and its location on the support strip 116 ensures that the support strip 116 will fold radially outwardly at the groove 134 once a compressive force exerted on the support strip 116 in the direction of the longitudinal axis 102 exceeds a predetermined force, since the side of the support strip 116 facing away from the interior of the installation box 100 is able to absorb more force than the opposite side. The installation box 100 is designed such that the predetermined force may be applied by a person using manual power.

As illustrated in Figure 7, each support strip 116 may be curved along the circumference of the lower side wall portion 110, with a concave side of the support strip 116 facing an interior of the installation box 100. This curvature promotes the outward folding of the support strip 116 once said predetermined force is exceeded, and prevents an inward folding.

At the second upper edge region 112, each support strip 116 may be hingeably connected to the first lower edge region 108. In practice, an upper end of each support strip 116 may be rigidly connected to the first lower edge region 108 when the support strip 116 is in an extended state, and may be bent or broken at this connection, indicated with arrow 136 (Figure 6), when the support strip 116 is in a folded state, whereby the adjacent layer 124 made from flexible material provides a hinge function.

Similarly, at the second lower edge region 114, each support strip 116 may be hingeably connected to the bottom wall 115, in particular to the frame 126 thereof. In practice, a lower end of each support strip 116 may be rigidly connected to the bottom wall 115 when the support strip 116 is in an extended state, and may be bent or broken at this connection, indicated with arrow 138 (Figure 6), when the support strip 116 is in a folded state, whereby the adjacent layer 124 made from flexible material provides a hinge function.

The installation box 100 is provided with coupling portions 140 each defining a groove member and a hook member. The embodiment of the installation box 100 shown comprises ten coupling portions 140 on the outer side of the installation box 100: four circumferentially equidistant pairs of coupling portions 140, each pair adjacent to, and on opposing sides of respective window parts 122, and one pair of coupling portions 140 adjacent to, and on opposing sides of window part 132 on the bottom wall 115. Each pair of coupling portions 140 allows the installation box 100 to be coupled to another installation box, or allows a pipe portion comprising similar coupling portions to be coupled to the installation box 100. The coupling takes place by inserting the hook members of two coupling portions 140 of a first pair into groove members of two coupling portions 140 of a second pair, and at the same time inserting the hook members of the two coupling portions 140 of the second pair into groove members of the two coupling portions 140 of the first pair.

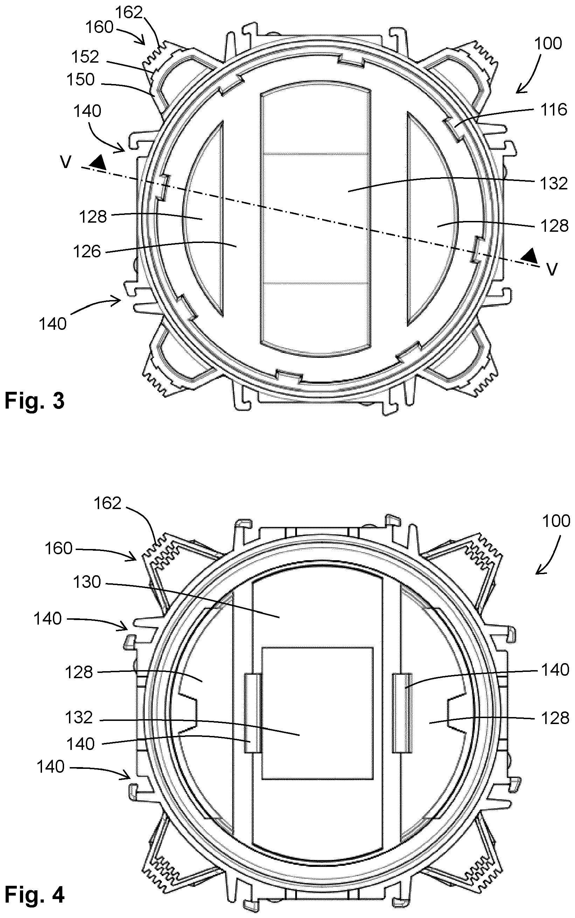

As shown e.g. in Figure 3, no support strip 116 is provided in a circumferential position of the installation box where a centre of a coupling with another installation box (i.e. a centre of a pair of coupling portions 140 or, in other words, a centre of a window part 122) is envisaged, thereby preventing a folded support strip of one of coupled installation boxes to mechanically interfere with a folded support strip the other one of the coupled installation boxes in case the support strips of the coupled installation boxes would need to enter into a folded state thereof during and after mounting of the coupled installation boxes. Instead, a folded support strip of one of the coupled installation boxes may extend into a flexible lower side wall part 118 of the other one of the coupled installation boxes, and be folded properly.

The upper side wall portion 104 is provided with radially outwardly extending retaining projections, comprising (as seen in cross-section) J-shaped retaining arms 150 and retaining flaps 160, to anchor the installation box 100 in a hole in a wall. In the embodiment shown, the installation box comprises four retaining arms 150 and twelve retaining flaps 160, however, in other embodiments these numbers may be selected differently. The projections are flexible and elastic to ensure a firm grip on, and a mechanical engagement with an inner wall of the hole, to avoid a displacement of the installation box 100 after mounting thereof in the hole in the wall.

Each retaining arm 150 is connected to the outer surface of the upper side wall portion 104 at one end thereof, the connection extending substantially parallel to the longitudinal axis 102. The retaining arm 150 may be elastically bent relative to said connection to deform when urged to do so during the mounting of the installation box 100 in a hole. The retaining arms comprise a centring function for the installation box 100 in the hole, in particular a hole in a massive wall. Structured ribs 152 extending parallel to the longitudinal axis 102 and radially from the retaining arm 150 enhance a grip of the retaining arm 150 on an inner wall of a hole in a wall. The retaining arms 150 are equidistantly spaced along the circumference of the upper side wall portion 104, and are configured to be diagonally anti-symmetrical. The retaining arms 150 mainly serve to centre the installation box 100 and hold the installation box 100 in a hole in a wall in a circumferential direction, but also resist a displacement of the installation box 100 in a direction of the longitudinal axis 102.

Each retaining flap 160 is connected to the outer surface of the upper side wall portion 104 at one end, the connection extending substantially in a circumferential direction. In the embodiment shown, four groups of three retaining flaps 160 each are provided, wherein a group of retaining flaps 160 is spaced in the direction of the longitudinal axis 102 and comprises retaining flaps 160 having different radial lengths, varying between a shortest length closest to the first lower edge region 108 and a largest length closest to the first upper edge region 106. The retaining flaps 160 each extend in a plane transverse to the longitudinal axis 102. Each retaining flap 160 may be elastically bent relative to said connection to deform upwardly when urged to do so during the mounting of the installation box 100 in a hole. Free ends 162 of the retaining flaps 160 are structured to enhance a grip of the retaining flap 160 on an inner wall of a hole in a wall. The groups of retaining flaps 160 are spaced equidistantly along the circumference of the upper side wall portion 104, and mainly serve to hold the installation box 100 in a hole in a wall in a downwards direction along the longitudinal axis, resisting a displacement of the installation box 100 in an upwards direction along the longitudinal axis 102, but also resisting a displacement of the installation box 100 in a circumferential direction. The different radial lengths of the retaining flaps 160 enable the installation box to be retained in holes having different diameters, wherein the retaining flaps 160 having the shortest length are particularly effective in holes having a relatively small diameter (wherein the retaining flaps 160 having the largest length are less effective), whereas the retaining flaps 160 having the largest length are particularly effective in holes having a relatively large diameter (wherein the retaining flaps 160 having the shortest length are less effective). The retaining flaps having an intermediate length are most effective in holes having a medium diameter (wherein the retaining flaps 160 having the shortest length and those having the largest length are less effective).

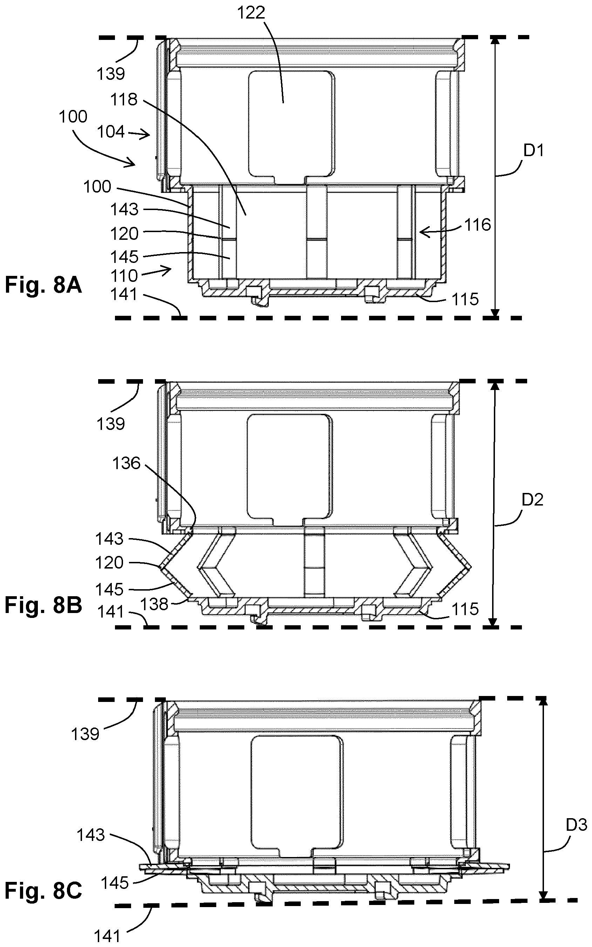

The mounting of the installation box 100 in a hole in a wall is illustrated with the aid of Figures 8A, 8B and 8C. For clarity, the layer 124 is omitted in these Figures.

During mounting the installation box 100 in a hole of a wall (an outer plane of the wall being indicated by dashed line 139), the bottom wall 115 of the installation box 100 may move relatively soft material, such as hardened plaster, aside from the inner wall of the hole, by breaking it away or breaking it to pieces, or pulverizing it, for example. For this purpose, a force which may be referred to as a mounting force exerted on the installation box 100, for example at the box mouth (or the first upper edge region 106), or at a part of the box mouth, is transmitted through the rigid upper side wall portion 104 to at least some of the support strips 116 to the bottom wall 115 in a direction along the longitudinal axis 102 of the installation box 100. At this stage, the mounting force, as distributed across one or more support strips 116, may lead to a force on each support strip 116 being less than or equal to the predetermined force under which the support strip maintains its extended state, and stays in its extended state, yet high enough to move the installation box 100 into the hole in the wall and remove obstacles of relatively soft material in the mounting path of the installation box 100. At this stage, the installation box 100 retains its maximum, first height. The lower side wall parts 118, being made from a flexible material, cannot transfer any substantial force in the direction of the longitudinal axis 102 of the installation box 100.

The hole in the wall may be as deep as, or deeper than (see distance D1 in Figure 8A), the maximum, first height of the installation box 100. If the force on each support strip 116 is not higher than said predetermined force, in this case the mouth of the installation box 100 may be mounted flush with the outer plane 139 of the wall in which the hole is provided, retaining its maximum, first height, with all support strips 116 in their extended state, providing a maximum volume at the interior of the installation box 100 for wiring and mounting installation material.

On the other hand, assuming that the depth of the hole is less (see distance D2 in Figure 8B and distance D3 in Figure 8C) than the maximum, first height of the installation box, then during the mounting of the installation box 100 there will be a point where the bottom wall 115 of the installation box 100 contacts the hole bottom 141, so that the bottom wall 115 of the installation box 100 cannot move any further into the hole. Next, by increasing the mounting force to exceed said predetermined force at each support strip 116 under which the support strips 116 transfer from their extended state into their folded state, the support strips 116 will collapse and fold along their folding line 120, whereby the height of the lower side wall portion 110 may decrease, and the upper side wall portion 104 may move further into the hole until the box mouth is substantially flush with the outer plane 139 of the wall in which the hole is provided. When collapsing, each support strip 116 comprises an upper strip section 143 on one side of the folding line 120, and a lower strip section 145 on the other side of the folding line 120. In the collapsed state of the support strip 116, the respective upper strip section 143 and lower strip section 145 in itself may remain straight, or may bend and be curved as seen in a plane extending through the longitudinal axis 102 of the installation box. In the illustrated embodiment, the upper and lower strip sections 143, 145 remain straight. The flexible lower side wall parts 118 will be locally stretched in the folded state of the adjacent support strips 116, however, they will keep each mesh formed between edges of adjacent support strips 116, the second upper edge region 112 and the second lower edge region 114 closed or sealed.

When the installation box 100 is flush mounted, still assuming that the depth D2 or D3 of the hole is less than the maximum, first height of the installation box 100, for each support strip 116 at least part of the strip section 143, 145 of the support strip 116 on one side of the folding line 120 may be oriented at an angle of less than 180° to at least part of another strip section 145, 143 of the support strip 116 on the other side of the folding line 120. At most, said angle is 0° when the two (parts of the) respective strip sections 143, 145 rest against each other, whereby the lower side wall portion 110 has a minimum height, and accordingly also the installation box 100 has its minimum height, as illustrated in Figure 8C. However, depending on the depth D1, D2 or D3 of the hole in the wall, any angle between (and including) 0° and 180° is possible.

Accordingly, the installation box 100 will fit into holes in a wall having different depths, while providing optimum space in the interior of the installation box 100, both with the support strips 116 in an extended state and with the support strips 116 in a folded state.

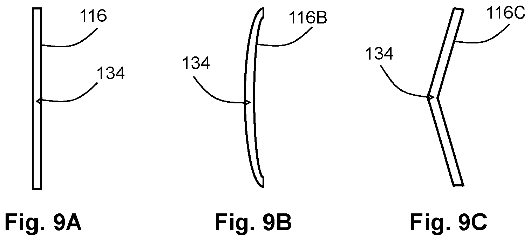

In the embodiment of the installation box 100 discussed above, in the extended state of the support strip 116, the support strip 116 is straight, as illustrated in the longitudinal cross-sectional view according to Fig. 9A. In other embodiments, the support strip in its extended state may be bent or curved, like the support strip 116B as illustrated in the longitudinal cross-sectional view according to Fig. 9B, wherein the concave side of the support strip 116B will be facing the interior of the installation box. In still other embodiments, the support strip in its extended state may be angled, where a straight upper support strip section extends at an angle to a straight lower support strip section, like the support strip 116C as illustrated in the longitudinal cross-sectional view according to Fig. 9C, wherein the concave side of the support strip 116C will be facing the interior of the installation box.

As explained in detail above, an installation box for mounting in a hole of a wall has a longitudinal axis, and comprises: a rigid cylindrical upper side wall portion having a first upper edge region defining a box mouth, and a first lower edge region; a deformable cylindrical lower side wall portion having a second upper edge region adjoining the first lower edge region, and a second lower edge region; and a circular bottom wall adjoining the second lower edge region. The lower side wall portion comprises: a plurality of support strips spaced along the circumference of the lower side wall portion, each support strip extending between the second upper edge region and the second lower edge region in the direction of the longitudinal axis; and a plurality of lower side wall parts made from a flexible material, each extending between two adjacent support strips and between the second upper edge region and the second lower edge region. Each support strip is configured to remain in an extended state under a compressive force exerted in a direction along the longitudinal axis of the installation box when said force is less than or equal to a predetermined force, and to fold outwardly from the extended state to a folded state when said force exceeds said predetermined force.

As required, detailed embodiments of the present invention are disclosed herein. However, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a"/"an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

## Claims

1. An installation box (100) for mounting in a hole of a wall, the installation box having a longitudinal axis (102), and comprising:
a rigid cylindrical upper side wall portion (104) having a first upper edge region (106) defining a box mouth, and a first lower edge region (108);
a deformable cylindrical lower side wall portion (110) having a second upper edge region (112) adjoining the first lower edge region, and a second lower edge region (114); and
a circular bottom wall (115) adjoining the second lower edge region,
wherein the lower side wall portion (110) comprises:
a plurality of support strips (116) spaced along the circumference of the lower side wall portion (110), each support strip extending between the second upper edge region (112) and the second lower edge region (114) in the direction of the longitudinal axis (102); and
a plurality of lower side wall parts (118) made from a flexible material, each extending in a circumferential direction from one support strip (116) to an adjacent support strip (116) and extending in a longitudinal direction from the second upper edge region (112) to the second lower edge region (114), wherein a mesh formed between each pair of adjacent support strips and between the second upper edge region and the second lower edge region is closed off or sealed by a lower side wall part, and wherein the support strips are made from a material which is more rigid than the flexible material of the lower side wall parts,
wherein each support strip (116) has an extended state and a folded state, and is configured to remain in the extended state under a compressive force exerted in a direction along the longitudinal axis (102) when said force is less than or equal to a predetermined force, and to fold outwardly from the extended state to the folded state along a folding line (120) located between the second upper edge region (112) and the second lower edge region (114) and extending transverse to the longitudinal axis of the installation box, when said compressive force exceeds said predetermined force, and
wherein the installation box has a first height when each support strip (116) is in its extended state, and the installation box has a second height when each support strip is in its folded state, wherein the second height is smaller than the first height.

2. The installation box (100) according to claim 1, wherein, at the second upper edge region (112), each support strip (116) is hingeably connected to the first lower edge region (108).

3. The installation box (100) according to claim 1 or 2, wherein at the second lower edge region (114), each support strip (116) is hingeably connected to the bottom wall (115).

4. The installation box (100) according to any one of the preceding claims, wherein the folding line (120) is defined by at least one recess or groove (134) of the support strip (116).

5. The installation box (100) according to claim 4, wherein the at least one recess or groove (134) is located at the side of the support strip (116) facing an interior of the installation box.

6. The installation box (100) according to any one of the preceding claims, wherein a distance between the folding line (120) and the second upper edge region (112) is substantially equal to the distance between the folding line (120) and the second lower edge region (114).

7. The installation box (100) according to any one of the preceding claims, wherein each support strip (116) is curved along the circumference of the lower side wall portion (110), with a concave side of the support strip (116) facing an interior of the installation box.

8. The installation box (100) according to any one of the preceding claims, wherein the width of each support strip (116) in a circumferential direction of the lower side wall portion (110) is smaller than the length of the support strip (116) in a direction along the longitudinal axis (102).

9. The installation box (100) according to claim 8, wherein a ratio of the width to the length of the support strip (116) is between 0.1 and 0.5, in particular about 0.15.

10. The installation box (100) according to any one of the preceding claims, wherein the support strips (116) are equidistantly spaced along the circumference of the lower side wall portion (110).

11. The installation box (100) according to any one of the preceding claims, wherein a width of each support strip (116) in the circumferential direction of the lower side wall portion (110) is the same.

12. The installation box (100) according to any one of the preceding claims, wherein a ratio of the width of a support strip (116) to a width of a lower side wall part (118) is between 0.15 and 1, in particular about 0.2.

13. The installation box (100) according to any one of the preceding claims, wherein each support strip (116) in its extended state is located within an outer circumference of the upper side wall portion (104) and each support strip (116) in a folded state thereof at least partially extends outside the outer circumference of the upper side wall portion (104).

14. The installation box (100) according to any one of the preceding claims, wherein the lower side wall parts (118) are integral with a cylindrical layer of flexible material provided on the support strips (116) at the side thereof facing away from the interior of the installation box.

15. The installation box (100) according to any one of the preceding claims, wherein each support strip (116) is made of polypropylene and/or each lower side wall part (118) is made of a thermoplastic elastomer, TPE.

16. The installation box (100) according to any one of the preceding claims, wherein the upper side wall portion (104) on its outer surface is provided with radially extending retaining projections for clamping the installation box inside the hole of the wall, wherein the retaining projections are flexible and elastic, and comprise:
retaining arms (150) each having a J-shaped cross-section, each retaining arm being connected to the outer surface of the upper side wall portion (104) at one end of the retaining arm, the connection extending substantially parallel to the longitudinal axis (102), each retaining arm being configured to be elastically bent relative to said connection to deform when urged to do so during the mounting of the installation box in the hole; and
retaining flaps (160) connected to the outer surface of the upper side wall portion (104) at one end of each retaining flap, the connection extending substantially in a circumferential direction, each retaining flap extending substantially in a plane transverse to the longitudinal axis (102), and being configured to be elastically bent relative to said connection to deform upwardly when urged to do so during the mounting of the installation box in the hole.

## Patentansprüche

1. Installationsdose (100) zur Montage in einem Loch in einer Wand, wobei die Installationsdose eine Längsachse (102) aufweist und Folgendes umfasst:
einen starren zylinderförmigen oberen Seitenwandungsabschnitt (104) mit einer ersten oberen Kantenregion (106), die eine Dosenmündung definiert, und einer ersten unteren Kantenregion (108),
einen verformbaren zylinderförmigen unteren Seitenwandungsabschnitt (110) mit einer zweiten oberen Kantenregion (112), die an die erste untere Kantenregion grenzt, und einer zweiten unteren Kantenregion (114), und
eine kreisförmige untere Wandung (115), die an die zweite untere Kantenregion grenzt,
wobei der untere Seitenwandungsabschnitt (110) Folgendes umfasst:
mehrere Stützstreifen (116), die entlang des Umfangs des unteren Seitenwandungsabschnitts (110) beabstandet sind, wobei sich jeder Stützstreifen in der Richtung der Längsachse (102) zwischen der zweiten oberen Kantenregion (112) und der zweiten unteren Kantenregion (114) erstreckt, und
mehrere untere Seitenwandungsteile (118), die aus einem flexiblen Material bestehen und sich jeweils in einer Umfangsrichtung von einem Stützstreifen (116) zu einem benachbarten Stützstreifen (116) erstrecken und sich in einer Längsrichtung von der zweiten oberen Kantenregion (112) zu der zweiten unteren Kantenregion (114) erstrecken, wobei ein Gitter, das zwischen jedem Paar benachbarter Stützstreifen und zwischen der zweiten oberen Kantenregion und der zweiten unteren Kantenregion gebildet ist, durch einen unteren Seitenwandungsabschnitt verschlossen oder versiegelt ist und wobei die Stützstreifen aus einem Material bestehen, das starrer ist als das flexible Material der unteren Seitenwandungsabschnitte,
wobei jeder Stützstreifen (116) einen gestreckten Zustand und einen gefalteten Zustand aufweist und dafür gestaltet ist, unter einer Kompressionskraft, die in einer Richtung entlang der Längsachse (102) ausgeübt wird, in dem gestreckten Zustand zu bleiben, wenn die Kraft kleiner oder gleich einer vorbestimmten Kraft ist, und sich von dem gestreckten Zustand entlang einer Faltlinie (120), die sich zwischen der zweiten oberen Kantenregion (112) und der zweiten unteren Kantenregion (114) befindet und sich quer zu der Längsachse der Installationsdose erstreckt, nach außen in den gefalteten Zustand zu falten, wenn die Kompressionskraft die vorbestimmte Kraft übersteigt, und
wobei die Installationsdose eine erste Höhe aufweist, wenn sich jeder Stützstreifen (116) in seinem gestreckten Zustand befindet, und die Installationsdose eine zweite Höhe aufweist, wenn sich jeder Stützstreifen in seinem gefalteten Zustand befindet, wobei die zweite Höhe kleiner als die erste Höhe ist.

2. Installationsdose (100) nach Anspruch 1, wobei jeder Stützstreifen (116) an der zweiten oberen Kantenregion (112) gelenkig mit der ersten unteren Kantenregion (108) verbunden ist.

3. Installationsdose (100) nach Anspruch 1 oder 2, wobei jeder Stützstreifen (116) an der zweiten unteren Kantenregion (114) gelenkig mit der unteren Wandung (115) verbunden ist.

4. Installationsdose (100) nach einem der vorhergehenden Ansprüche, wobei die Faltlinie (120) durch mindestens eine Vertiefung oder Rille (134) des Stützstreifens (116) definiert ist.

5. Installationsdose (100) nach Anspruch 4, wobei sich die mindestens eine Vertiefung oder Rille (134) an der Seite des Stützstreifens (116) befindet, die zu einem Innenraum der Installationsdose weist.

6. Installationsdose (100) nach einem der vorhergehenden Ansprüche, wobei ein Abstand zwischen der Faltlinie (120) und der zweiten oberen Kantenregion (112) im Wesentlichen gleich dem Abstand zwischen der Faltlinie (120) und der zweiten unteren Kantenregion (114) ist.

7. Installationsdose (100) nach einem der vorhergehenden Ansprüche, wobei jeder Stützstreifen (116) entlang des Umfangs des unteren Seitenwandungsabschnitts (110) gekrümmt ist, wobei eine konkave Seite des Stützstreifens (116) zu einem Innenraum der Installationsdose weist.

8. Installationsdose (100) nach einem der vorhergehenden Ansprüche, wobei die Breite jedes Stützstreifens (116) in einer Umfangsrichtung des unteren Seitenwandungsabschnitts (110) kleiner als die Länge des Stützstreifens (116) in einer Richtung entlang der Längsachse (102) ist.

9. Installationsdose (100) nach Anspruch 8, wobei ein Verhältnis der Breite zu der Länge des Stützstreifens (116) zwischen 0,1 und 0,5 beträgt, insbesondere etwa 0,15.

10. Installationsdose (100) nach einem der vorhergehenden Ansprüche, wobei die Stützstreifen (116) entlang des Umfangs des unteren Seitenwandungsabschnitts (110) gleich beabstandet sind.

11. Installationsdose (100) nach einem der vorhergehenden Ansprüche, wobei eine Breite jedes Stützstreifens (116) in der Umfangsrichtung des unteren Seitenwandungsabschnitts (110) gleich ist.

12. Installationsdose (100) nach einem der vorhergehenden Ansprüche, wobei ein Verhältnis der Breite eines Stützstreifens (116) zu einer Breite eines unteren Seitenwandungsteiles (118) zwischen 0,15 und 1 beträgt, insbesondere etwa 0,2.

13. Installationsdose (100) nach einem der vorhergehenden Ansprüche, wobei sich jeder Stützstreifen (116) in seinem gestreckten Zustand innerhalb eines Außenumfangs des oberen Seitenwandungsabschnitts (104) befindet und sich jeder Stützstreifen (116) in seinem gefalteten Zustand zumindest teilweise außerhalb des Außenumfangs des oberen Seitenwandungsabschnitts (104) erstreckt.

14. Installationsdose (100) nach einem der vorhergehenden Ansprüche, wobei die unteren Seitenwandungsteile (118) einstückig mit einer zylinderförmigen Schicht flexiblen Materials gebildet sind, das auf den Stützstreifen (116) an jener ihrer Seiten bereitgestellt ist, die von dem Innenraum der Installationsdose weg weist.

15. Installationsdose (100) nach einem der vorhergehenden Ansprüche, wobei jeder Stützstreifen (116) aus Polypropylen besteht und/oder jeder untere Seitenwandungsteil (118) aus einem thermoplastischen Elastomer, TPE, besteht.

16. Installationsdose (100) nach einem der vorhergehenden Ansprüche, wobei der obere Seitenwandungsabschnitt (104) auf seiner Außenseite mit sich radial erstreckenden Haltevorsprüngen versehen ist, um die Installationsdose im Innern des Lochs in der Wand festzuklemmen, wobei die Haltevorsprünge flexibel und elastisch sind und Folgendes umfassen:
Haltearme (150), die jeweils einen J-förmigen Querschnitt aufweisen, wobei jeder Haltearm an einem Ende des Haltearms mit der Außenfläche des oberen Seitenwandungsabschnitts (104) verbunden ist, wobei sich die Verbindung im Wesentlichen parallel zu der Längsachse (102) erstreckt, wobei jeder Haltearm dafür gestaltet ist, sich relativ zu der Verbindung elastisch zu biegen, um sich zu verformen, wenn er während der Montage der Installationsdose in dem Loch dazu gezwungen wird, und
Haltelaschen (160), die an einem Ende jeder Haltelasche mit der Außenfläche des oberen Seitenwandungsabschnitts (104) verbunden sind, wobei sich die Verbindung im Wesentlichen in einer Umfangsrichtung erstreckt, wobei sich jede Haltelasche im Wesentlichen in einer Ebene erstreckt, die senkrecht zu der Längsachse (102) liegt, und dafür gestaltet ist, sich relativ zu der Verbindung elastisch zu biegen, um sich aufwärts zu verformen, wenn sie während der Montage der Installationsdose in dem Loch dazu gezwungen wird.

## Revendications

1. Boîte d'installation (100) destinée à être montée dans un trou d'un mur, la boîte d'installation ayant un axe longitudinal (102), et comprenant :
une portion paroi latérale supérieure cylindrique rigide (104) ayant une première région bord supérieure (106) définissant une embouchure de boîte, et une première région bord inférieure (108) ;
une portion paroi latérale inférieure cylindrique déformable (110) ayant une seconde région bord supérieure (112) contiguë à la première région bord inférieure, et une seconde région bord inférieure (114) ; et
une paroi de fond circulaire (115) contiguë à la seconde région bord inférieure,
dans laquelle la portion paroi latérale inférieure (110) comprend :
une pluralité de bandes de support (116) espacées le long de la circonférence de la portion paroi latérale inférieure (110), chaque bande de support s'étendant entre la seconde région bord supérieure (112) et la seconde région bord inférieure (114) dans la direction de l'axe longitudinal (102) ; et
une pluralité de parties parois latérales inférieures (118) faites d'un matériau flexible, chacune s'étendant dans une direction circonférentielle depuis une bande de support (116) jusqu'à une bande de support adjacente (116) et s'étendant dans une direction longitudinale depuis la seconde région bord supérieure (112) jusqu'à la seconde région bord inférieure (114), dans laquelle un réseau formé entre chaque paire de bandes de support adjacentes et entre la seconde région bord supérieure et la seconde région bord inférieure est fermé ou clos par une partie paroi latérale inférieure, et dans laquelle les bandes de support sont faites d'un matériau qui est plus rigide que le matériau flexible des parties parois latérales inférieures,
dans laquelle chaque bande de support (116) a un état étendu et un état plié, et est configurée pour rester dans l'état étendu sous une force de compression exercée dans une direction le long de l'axe longitudinal (102) lorsque ladite force est inférieure ou égale à une force prédéterminée, et pour se plier vers l'extérieur, depuis l'état étendu jusqu'à l'état plié, le long d'une ligne de pliage (120) située entre la seconde région bord supérieure (112) et la seconde région bord inférieure (114) et s'étendant transversalement à l'axe longitudinal de la boîte d'installation, lorsque ladite force de compression dépasse ladite force prédéterminée, et
dans laquelle la boîte d'installation a une première hauteur lorsque chaque bande de support (116) est dans son état étendu, et la boîte d'installation a une seconde hauteur lorsque chaque bande de support est dans son état plié, dans laquelle la seconde hauteur est plus petite que la première hauteur.

2. Boîte d'installation (100) selon la revendication 1, dans laquelle, dans la seconde région bord supérieure (112), chaque bande de support (116) est reliée de façon articulable à la première région bord inférieure (108).

3. Boîte d'installation (100) selon la revendication 1 ou 2, dans laquelle, dans la seconde région bord inférieure (114), chaque bande de support (116) est reliée de façon articulable à la paroi de fond (115).

4. Boîte d'installation (100) selon l'une quelconque des revendications précédentes, dans laquelle la ligne de pliage (120) est définie par au moins un évidement ou une rainure (134) de la bande de support (116).

5. Boîte d'installation (100) selon la revendication 4, dans laquelle l'au moins un évidement ou une rainure (134) est situé(e) sur le côté de la bande de support (116) faisant face à un intérieur de la boîte d'installation.

6. Boîte d'installation (100) selon l'une quelconque des revendications précédentes, dans laquelle une distance entre la ligne de pliage (120) et la seconde région bord supérieure (112) est sensiblement égale à la distance entre la ligne de pliage (120) et la seconde région bord inférieure (114).

7. Boîte d'installation (100) selon l'une quelconque des revendications précédentes, dans laquelle chaque bande de support (116) est incurvée le long de la circonférence de la portion paroi latérale inférieure (110), un côté concave de la bande de support (116) faisant face à un intérieur de la boîte d'installation.

8. Boîte d'installation (100) selon l'une quelconque des revendications précédentes, dans laquelle la largeur de chaque bande de support (116) dans une direction circonférentielle de la portion paroi latérale inférieure (110) est plus petite que la longueur de la bande de support (116) dans une direction le long de l'axe longitudinal (102).

9. Boîte d'installation (100) selon la revendication 8, dans laquelle un rapport de la largeur par rapport à la longueur de la bande de support (116) est entre 0,1 et 0,5, en particulier environ 0,15.

10. Boîte d'installation (100) selon l'une quelconque des revendications précédentes, dans laquelle les bandes de support (116) sont espacées de façon équidistante le long de la circonférence de la portion paroi latérale inférieure (110).

11. Boîte d'installation (100) selon l'une quelconque des revendications précédentes, dans laquelle une largeur de chaque bande de support (116) dans la direction circonférentielle de la portion paroi latérale inférieure (110) est la même.

12. Boîte d'installation (100) selon l'une quelconque des revendications précédentes, dans laquelle un rapport de la largeur d'une bande de support (116) par rapport à une largeur d'une partie paroi latérale inférieure (118) est entre 0,15 et 1, en particulier environ 0,2.

13. Boîte d'installation (100) selon l'une quelconque des revendications précédentes, dans laquelle chaque bande de support (116), dans son état étendu, est située au sein d'une circonférence extérieure de la portion paroi latérale supérieure (104) et chaque bande de support (116), dans un état plié de celle-ci, s'étend au moins partiellement en dehors de la circonférence extérieure de la portion paroi latérale supérieure (104).

14. Boîte d'installation (100) selon l'une quelconque des revendications précédentes, dans laquelle les parties parois latérales inférieures (118) sont monoblocs avec une couche cylindrique de matériau flexible prévue sur les bandes de support (116) sur le côté de celles-ci faisant face à l'opposé de l'intérieur de la boîte d'installation.

15. Boîte d'installation (100) selon l'une quelconque des revendications précédentes, dans laquelle chaque bande de support (116) est faite de polypropylène et/ou chaque partie paroi latérale inférieure (118) est faite d'un élastomère thermoplastique, TPE.

16. Boîte d'installation (100) selon l'une quelconque des revendications précédentes, dans laquelle la portion paroi latérale supérieure (104) sur sa surface extérieure est pourvue de saillies de retenue s'étendant radialement pour serrer la boîte d'installation à l'intérieur du trou du mur, dans laquelle les saillies de retenue sont flexibles et élastiques, et comprennent :
des bras de retenue (150), chacun ayant une section transversale en forme de J, chaque bras de retenue étant relié à la surface extérieure de la portion paroi latérale supérieure (104) à une extrémité du bras de retenue, la liaison s'étendant sensiblement parallèlement à l'axe longitudinal (102), chaque bras de retenue étant configuré pour être élastiquement fléchi relativement à ladite liaison pour se déformer lorsqu'il est forcé de le faire durant le montage de la boîte d'installation dans le trou ; et
des pattes de retenue (160) reliées à la surface extérieure de la portion paroi latérale supérieure (104) à une extrémité de chaque patte de retenue, la liaison s'étendant sensiblement dans une direction circonférentielle, chaque patte de retenue s'étendant sensiblement dans un plan transversal à l'axe longitudinal (102), et étant configurée pour être élastiquement fléchie relativement à ladite liaison pour se déformer vers le haut lorsqu'elle est forcée de le faire durant le montage de la boîte d'installation dans le trou.
